# EUROPEAN PATENT APPLICATION

(11) **EP 1 882 577 A1**
(43) Date of publication of application: **30.01.2008**
(21) Application number: 07113114.8
(22) Date of filing: 25.07.2007
(51) Int. Cl.: B29C 45/26, B29C 45/14, F16H 57/02, H02K 7/116

(54) **Gearmotor and method for making it**

(30) Priority: 26.07.2006 IT BO20060561
(71) Applicant: SITI S.p.A., 40050 Monteveglio (Bologna) (IT)
(72) Inventor: Grazia, Cesare, 40012 Calderara di Reno (Bologna) (IT)
(74) Representative: Lanzoni, Luciano

(57) **Abstract**

A method for making gearmotors (1) comprising a casing (2), a pinion (3) and a gear (4), meshed with the pinion (3), both supported by the casing (2), comprises the steps of:
- preparing a mould for the casing (2);
- making the casing (2) by casting in the mould;
the step of making the casing (2) consisting of a step of injecting a molten plastic material into the mould (12) so that the casing (2) is formed by the plastic material once it has cooled.

## Description

The present invention relates to a method for making a gearmotor and in particular a method for making a gearmotor using a plastic material.

Prior art processes for making gearmotors usually involve mechanical machining to obtain a metal casing in which the gearmotor moving parts are assembled, for example, briefly, the ring gear and the pinion.

The classic processes involve making castings, several parts of which are subsequently machined using machine tools.

In general, the rough casing is made by casting. Once removed from the mould, it is deburred or in any case cleaned with the removal of shavings, holes are made where necessary, threads prepared, with restoration of the design tolerances essential for guaranteeing correct gearmotor operation and avoiding, in particular, seizing phenomena during operation.

In other words, a plurality of operations are carried out after casting, which have a significant effect on the cost of the finished product.

Moreover, for that reason, conventional processes are relatively long, since the above-mentioned mechanical machining means having to have available machine tools and storage warehouses for semi-finished products, with evident logistical complications in gearmotor production and assembly.

In this context, the main technical purpose of the present invention is to propose a method for making gearmotors which is free of the above-mentioned disadvantages.

The present invention has for an aim to propose a method which simplifies the mechanical machining on semi-finished products so as to reduce both the gearmotor production and assembly times and the relative costs.

The present invention also has for an aim to propose a method for making the gearmotor which overcomes the logistical complications and reduces or eliminates the times for which semi-finished products remain in the warehouses.

The technical purpose indicated and the aims specified are substantially achieved by a method for making gearmotors comprising the operating steps described in claim 1 and in one or more of the dependent claims herein.

Further features and advantages of the present invention are more apparent in the detailed description below, with reference to a preferred, non-limiting, embodiment of a method for making gearmotors and of a gearmotor, illustrated in the accompanying drawings, in which:
- Figure 1 is a schematic longitudinal section of a gearmotor made using the method in accordance with the present invention;
- Figure 2 is a schematic cross-section of the gearmotor of Figure 1;
- Figure 3 is a schematic perspective view of a detail of the gearmotor from the previous Figures;
- Figure 4 is a schematic perspective view of a first block which is part of a mould suitable for implementing the method in accordance with the present invention;
- Figure 5 is a schematic perspective view of a second block which is part of the mould suitable for implementing the method in accordance with the present invention;
- Figures 6 and 7 are schematic sides views suitably in cross-section of a succession of steps of the method in accordance with the present invention;
- Figure 8 is a bottom plan view of a detail of the mould for making the gearmotor in accordance with the present invention;
- Figure 9 is a schematic side view of the detail from Figure 8;
- Figure 10 is a top plan view of the mould for implementing the method in accordance with the present invention, at a step of making hollows in a part of the gearmotor.

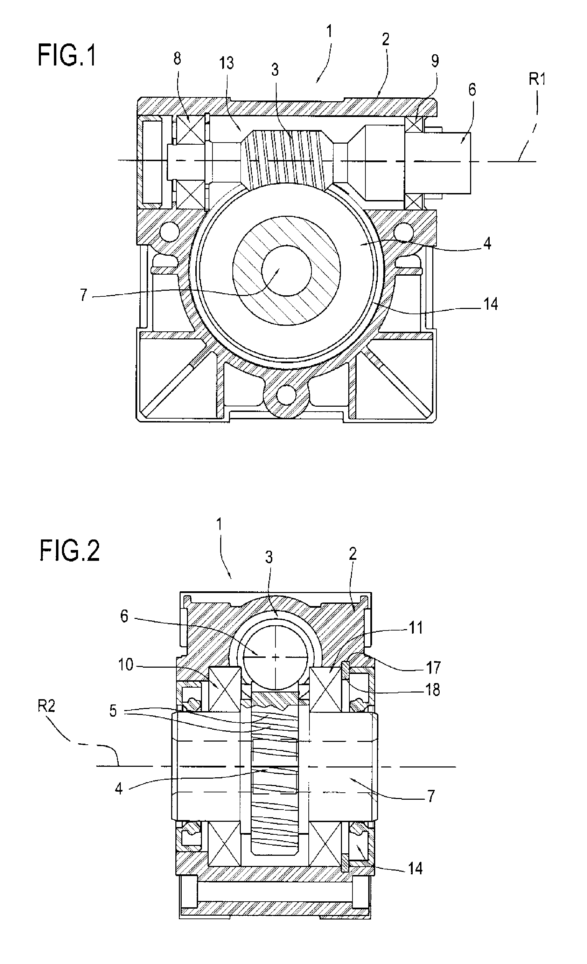

With reference to the accompanying drawings and in particular with reference to Figures 1 and 2, the numeral 1 denotes a gearmotor obtained with the method in accordance with the present invention.

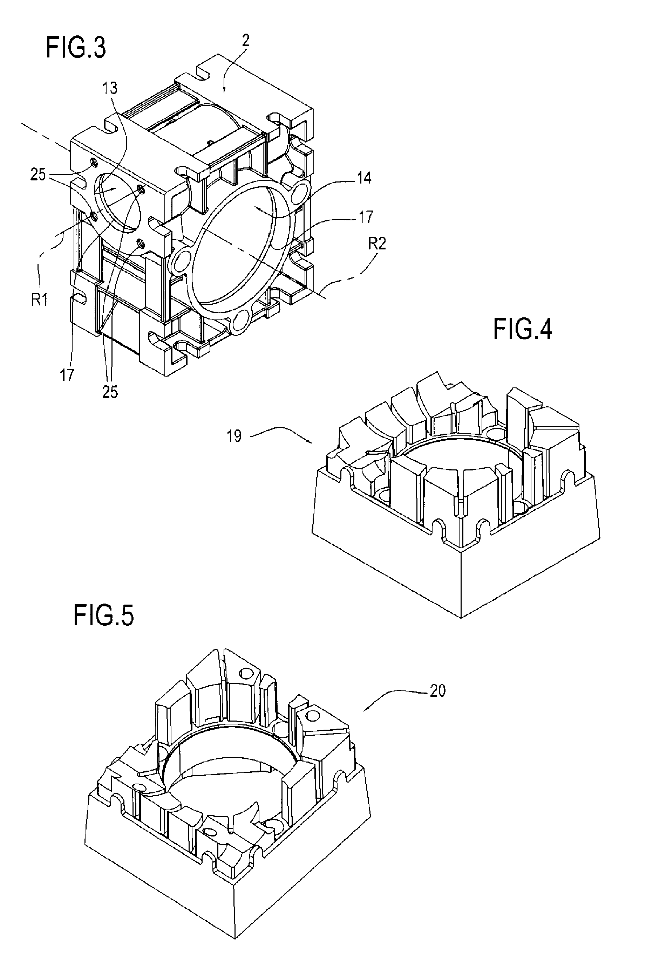

The gearmotor 1, whose description is limited to understanding of the invention, comprises, schematically a casing 2, illustrated in particular in Figure 3, housing a pinion 3 meshed with a relative gear 4.

It should be noticed that in the embodiment illustrated by way of example, the pinion 3 is a worm screw and the gear is a ring gear with relative slots 5 for engaging with the screw.

The pinion 3 is associated with a relative shaft 6 and the gear 4 is associated with a relative shaft 7.

The shaft 6 is connected to the casing 2 by relative bearings 8, 9 and the shaft 7 by relative bearings 10, 11, that is to say, the casing 2 supports the pinion 3 and the gear 4.

The method disclosed comprises the steps of preparing a mould 12 in which to make a casting using a plastic material to obtain the casing 2.

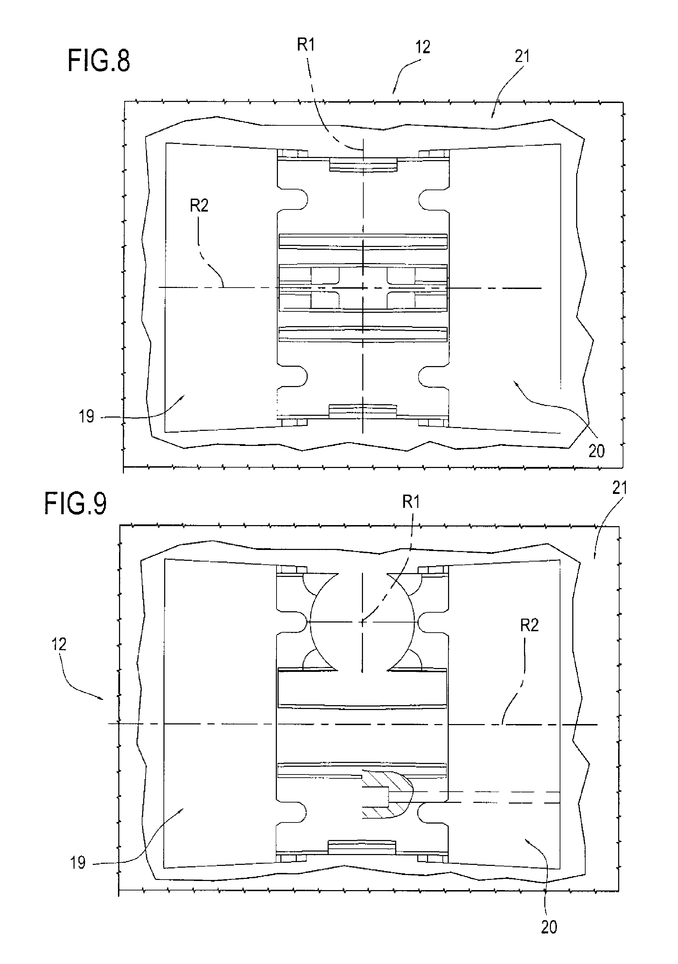

It should be noticed that the step of making the casing 2 consists of a step of injecting a molten plastic material into the mould 12, illustrated in particular in Figure 8 and 9, the molten plastic material cooling to form the casing 2.

It should be noticed that at the end of casting cooling in the mould 12, the casing 2 is ready for subsequent assembly of the gearmotor 1, since it does not require any further mechanical machining.

The pinion 3 and gear 4 with the relative shafts 6, 7 are housed in the casing 2 in respective cavities 13, 14.

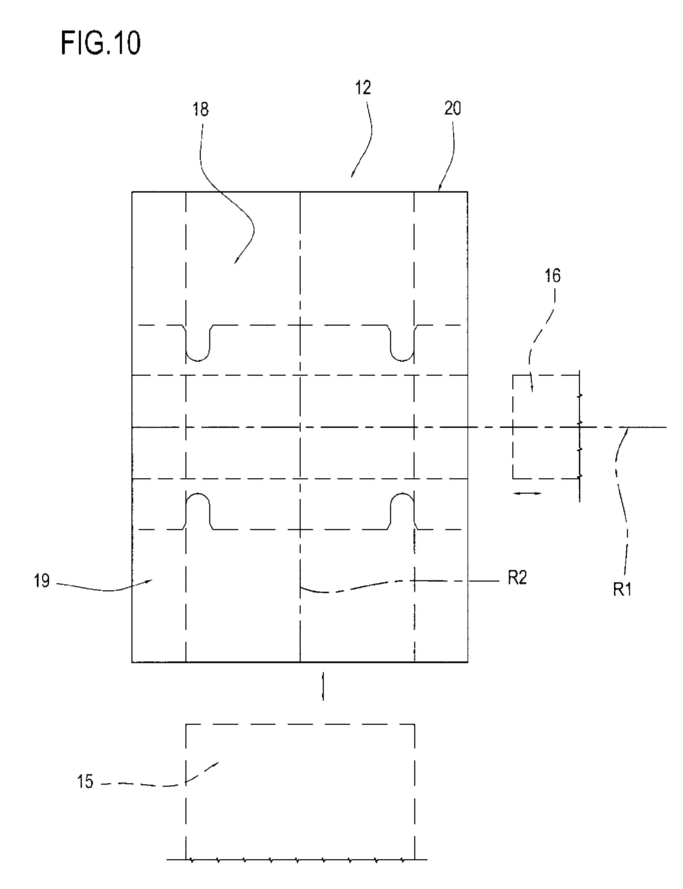

The method disclosed comprises the step of making the cavities 13, 14, that is to say, hollows, in the casing 2, by moving respective male elements 15, 16 relative to the mould 12, as is schematically illustrated in Figure 10 in which the male elements 15, 16 are respectively able to move along the axes R1 and R2 of the cavities 13, 14.

To keep the cavity 13 tolerances suitable for gearmotor 1 operation, the male element 15 is preferably cooled.

Similarly, to keep the cavity 14 tolerances suitable for gearmotor 1 operation, the male element 16 is cooled.

Advantageously, the method disclosed comprises the step of preparing the bearing 9 in the mould 12 so that it remains associated with the casing 2 after the molten material injected into the mould 12 has cooled.

To facilitate gearmotor assembly, the method disclosed also involves preparing the bearing 10 in the mould 12 so that it remains associated with the casing 2 after the molten material injected into the mould 12 has cooled.

The method comprises a step of making, in the casing 2, substantially annular cavities or grooves 17 in which means for fixing the shafts 6 and 7 are inserted.

In particular, with reference to the cavity 14 it should be noticed that the fixing means comprise an elastic ring 18 for fixing the shaft 7 by means of the bearing 11.

The mould 12 comprises a fixed block 19 and a movable block 20 which are drawn near, as illustrated in particular in Figures 8 and 9, and contained in a die 21 which is part of the mould 12.

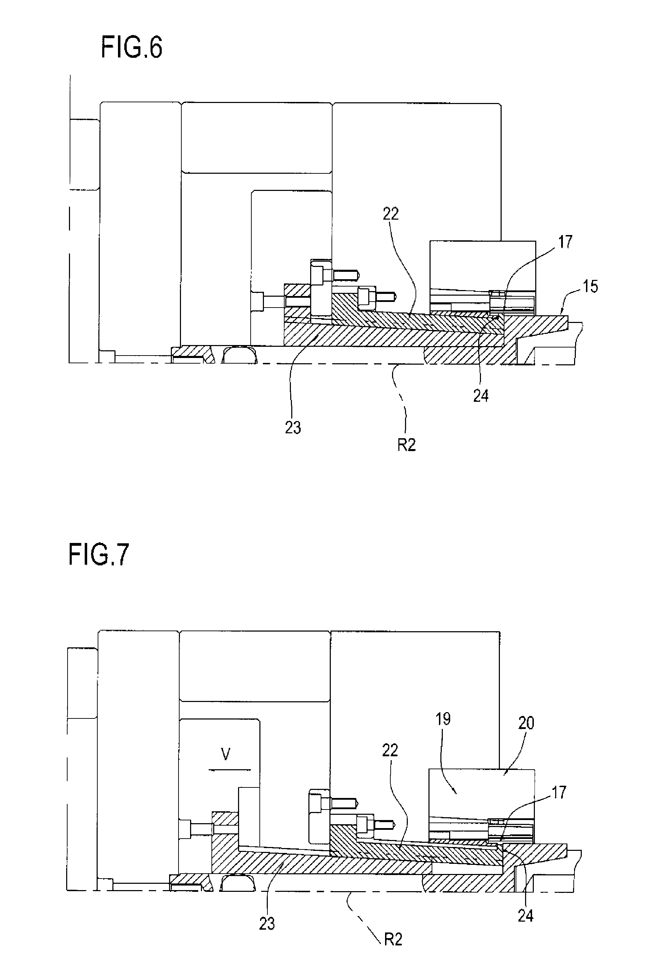

In particular with reference to Figures 6 and 7, it may be seen, for example, how, to form the cavity 17 relative to the cavity 14 and allow extraction of the male element 15 from the blocks 19 and 20, according to the method disclosed the male element 15 comprises an outer portion 22 sliding on an inner portion 23.

The outer portion 22 has a tooth 24 designed to define, during casing 2 casting, the hollow corresponding to the cavity 17.

Once the cavity 17 has been formed, according to the method the portion 23 of the male element 15, sliding in the direction V indicated in Figure 7, causes the portion 22 to move towards the axis R2 of the cavity 14 and consequently the tooth 24 comes out of the cavity 17 so that the male element 15 can move relative to the mould 12.

It should be noticed that such a movement towards the axis R2 is made possible by the particular substantially tapered shape of the portions 22 and 23 and by the fact that the portion 22 is free to move, set in motion by the portion 23, relative to the mould 12.

Advantageously, the method comprises the step of preparing in the mould 12 threaded inserts 25 which remain associated with the casing 2 at the end of casting cooling so that they are available for fitting elements of the gearmotor which are not illustrated, for example connecting flanges.

Advantageously, the method comprises the step of moulding in plastic material the gear 4 on the relative shaft 7 so as to speed up the production method.

Moreover, moulding is preferably carried out by heating the mould 12, in particular to around 60°C.

The invention described brings important advantages.

The casing made in a single body by moulding a plastic material allows the elimination of all mechanical machining normally needed after moulding metal alloys, significantly reducing production costs.

Once ejected from the mould, the casing is ready for gearmotor assembly with evident simplification of the logistics for management of semi-finished products and warehouses.

The invention described above may be modified and adapted without thereby departing from the scope of the inventive concept defined in the claims herein.

Moreover, all details of the invention may be substituted by technically equivalent elements.

## Claims

1. A method for making gearmotors comprising a casing (2), a pinion (3) and a gear (4), meshed with the pinion (3), the pinion (3) and the gear (4) being supported by the casing (2), comprising the steps of:
- preparing a mould (12) for the casing (2);
- making the casing (2) with a casting in the mould (12),
**characterised in that** the step of making the casing (2) consists of a step of injecting a molten plastic material into the mould (12), the casing (2) being formed by the plastic material once it has cooled.

2. The method according to claim 1, **characterised in that** it comprises the step of making hollows (12, 14, 17) in the casing (2), in particular cavities (12, 13) for the gear (4) and the pinion (3), by moving respective male elements (15, 16) relative to the mould (12).

3. The method according to claim 1 or 2, comprising the step of cooling the male elements (15, 16).

4. The method according to any of the claims from 1 to 3, comprising the step of preparing in the mould (12) supporting means (8, 9) for the pinion (3), said supporting means (8, 9) remaining associated with the casing (2) when the plastic material cools.

5. The method according to claim 4, **characterised in that** the supporting means (8, 9) for the pinion (3) comprise at least one bearing.

6. The method according to any of the claims from 1 to 5, comprising the step of preparing in the mould (12) supporting means (10, 11) for the gear (4), said supporting means (10, 11) for the gear (4) remaining associated with the casing (2) when the plastic material cools.

7. The method according to claim 6, **characterised in that** the supporting means (10, 11) for the gear (4) comprise at least one bearing.

8. The method according to any of the claims from 1 to 7, comprising the step of forming, in the cavity (13, 14) for the gear (4) or the pinion (3), an annular groove (17) for fixing means (18) for the gear (4) and/or the pinion (3), said fixing means (18) comprising in particular an elastic element.

9. The method according to claim 8, **characterised in that** the step of forming a groove (17) comprises the steps of preparing a male element for said groove (17), the male element (15) having in particular a tooth (24) corresponding to the groove (17), the method comprising the step of reducing the size of the male element (15) at the end of the injection so as to extract the male element (15) from the mould (12), the tooth (24) in particular having come out of the groove (17).

10. The method according to any of the claims from 1 to 9, comprising the step of assembling the pinion (3) and the gear (4) in the casing (2) at the end of casing (2) cooling, the casing (2) having been ejected from the mould (12).

11. The method according to any of the claims from 1 to 10, comprising the step of making the gear (4) by moulding a plastic material.

12. The method according to any of the claims from 1 to 11, comprising the step of heating the mould (12).

13. The method according to any of the claims from 1 to 12, comprising the step of heating the mould (12) to around 60°C.

14. A gearmotor comprising a casing (2), a pinion (3) and a gear (4), meshed with the pinion (3), said pinion (3) and gear being supported by the casing (2), **characterised in that** the casing (2) is made by moulding a plastic material.

15. A gearmotor casing, **characterised in that** it is made by moulding a plastic material.
